Europäisches Patentamt

**European Patent Office**

**Office européen des brevets**

(19)

(11) Publication number: **0 045 987**

**A1**

(12)

# EUROPEAN PATENT APPLICATION

(21) Application number: **81200789.6**

(22) Date of filing: **07.07.81**

(51) Int. Cl.³: **B 64 C 13/30**

(30) Priority: **13.08.80 US 177674**

(43) Date of publication of application:
**17.02.82 Bulletin 82/7**

(84) Designated Contracting States:
**DE FR GB IT NL SE**

(71) Applicant: **The Boeing Company**
**P.O. Box 3707**
**Seattle Washington 98124(US)**

(72) Inventor: **Cole, James Byron** .
**8212 S.E. 62nd St.**
**Mercer Island WA 98040(US)**

(74) Representative: **Hoijtink, Reinoud et al,**
**OCTROOIBUREAU ARNOLD & SIEDSMA Sweelinckplein**
**1**
**NL-2517 GK The Hague(NL)**

(54) Extendible airfoil cable drum track assembly.

(57) An actuation and extension mechanism for aerodynamic high-lift devices such as a wing leading edge slat or a wing trailing edge flap; wherein an aerodynamic panel (14) is connected to one end of an extendible track member (20) that is supported and guided by its other end through rollers (22) fixedly mounted to wing rib structure (10). The track member incorporates a cable (18) and drum (19) arrangement as part of the extension or retraction mechanism; and this combination of track, cable and drum provides the primary support and drive means for the high-lift device, without compromising the structural strength or the stress safety of said combination.

FIG. 2

EP 0 045 987 A1

# EXTENDIBLE AIRFOIL CABLE DRUM TRACK ASSEMBLY

The invention relates to aerodynamic high-lift devices which are extended, by an actuation mechanism, to operating positions relative to a fixed airfoil section for improving low-speed aerodynamic performance of an airplane during landing or take off mode of operation; and more particularly to a main support track which separately incorporates a cable and drum arrangement, and this combination provides for support and actuation of the aerodynamic device relative to the fixed airfoil section.

In the generally known actuation system for wing leading edge slats or trailing edge flaps the following type of units are generally spaced apart spanwise along the length of a slat or flap panel: a pair of carrier rails or main support tracks; a pair of driving ball-screw jacks or linear actuators and a pair of positioning or programming tracks. Another known actuation system has slat support track with gear teeth cut into the lower surface for meshing with a pinion drive gear; However, because the track is the main support for the aerodynamic loads imposed on the operatively extended slat, any cutouts in the lower surface of the track, such as for gear teeth, would set up a notch- stress condition that would compromise the structural strength and stress safety, which would be unacceptable for commercial passenger carrying airplanes.

Therefore, an advantage of combining the separate elements of a track with a cable and drum drive means, as taught by the present invention, permits each element to be of a different material and heat treated differently so as to provide the optimum hardness and structural strength characteristic for stress safety.

An object of the invention is to position the cable and portion of the cable drum up inside the channel of a hat-shaped cross section of the support track to protect the cable and cable drum winding from accumulating dirt.

An advantage of positioning the cable and a portion of the cable drum up inside the channel of the support track is that it allows the cable drum to be positioned up higher into the wing cavity and reduces the possibility of protrusion or bulging from the lower surface of the wing to provide clearance.

Another advantage is that the installation of the combination of a slat support track with a cable drum drive means, requires a minimum number of cutouts through the fixed wing leading edge; whereas, with known actuating systems incorporating linear actuators, an additional pair of cutouts are required per slat panel.

FIG. 1 is a plan view of a wing tip leading edge section with a spanwise series of slat panels.

FIG. 2 is a chordwise cross-sectional view taken along the lines 2-2 of FIG. 1 in the direction indicated and depicts a wing leading edge slat at its fully retracted position whereat it completes the leading edge profile of the wing airfoil section; and this slat position is generally for the cruise flight mode of airplane operation.

FIG. 3 is a view similar to FIG. 2 with the leading edge slat at a forward extended operating position whereat an aerodynamic slot is formed between the leading edge of the fixed wing structure and the trailing edge of the extended slat panel; and this slat position is generally used for the landing or takeoff mode of airplane operation.

FIG. 4 is an enlarged sectional view taken along the lines 4-4 of FIG. 2 in the direction indicated.

FIG. 5 is an enlarged side view of the cable and drum arrangement and its attachment to the slat carrier track.

FIG. 6 is a sectional view taken along the line 6-6 of FIG. 5 in the direction indicated.

FIG. 7 is a sectional view taken along the lines 7-7 of FIG. 5 in the direction indicated.

FIG. 8 is an enlarged sectional view taken along the line 8-8 of FIG. 2 in the direction indicated.

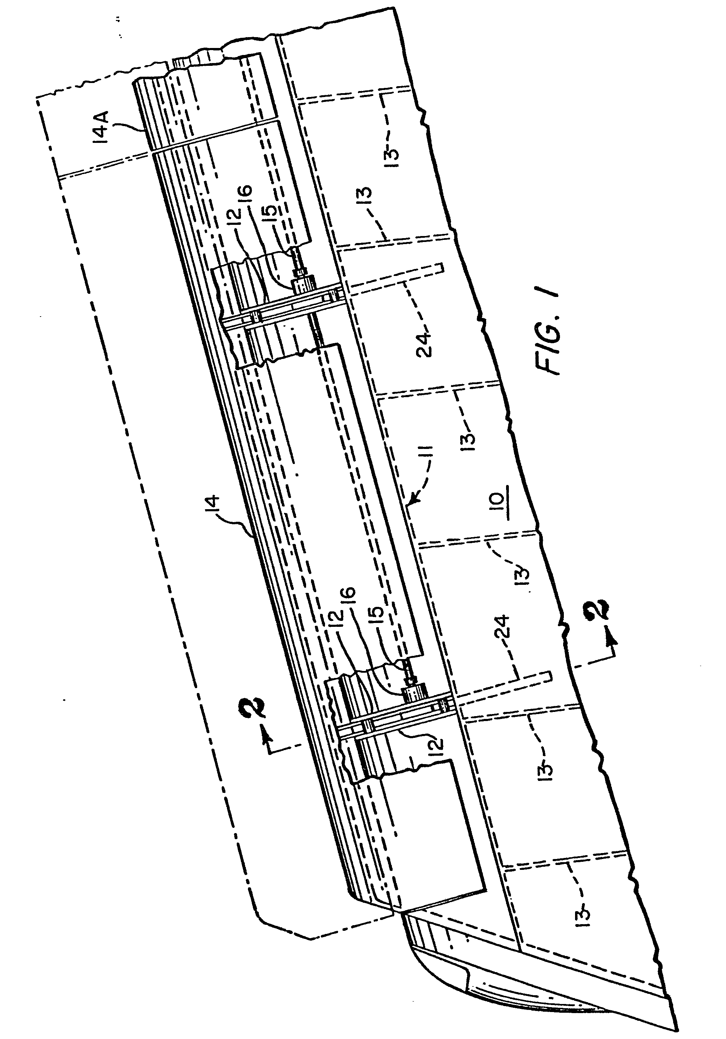

FIG. 1 is a plan view of an outboard, leading edge section of an airplane wing portion 10 having a front wing spar 11, leading edge ribs 12, main rib members 13 and a spanwise series of slat panels 14 along the wing leading edge. For extending or retracting the slat panels 14 relative to a fixed wing leading edge, a power drive system is mounted spanwise along the front wing spar 11; and comrpises: a power drive unit (not shown) such as a hydraulic or electric drive motor for rotating a spanwise series of axially aligned shafts or torque tubes 15, at a relatively high speed. The high speed shafts 15 operate the extension or retraction mechanism of the slat panels 14 through a speed reducer and torque converter unit 16 hereinafter referred to as rotary actuator 16. Each of the rotary actuators 16 is shown mounted adjacent to a pair of wing leading edge ribs 12 which straddle a cable 18 wound on a cable drum 19. The cable drum 19 is mounted on a splined collar 17 which is the output drive of the rotary actuator 16. The high speed shafts 15 operate through the rotary actuators 16 and function to controllably tie one slat panel 14 to its adjacent slat panel 14A, without any additional slat drive synchronization mechanism being required.

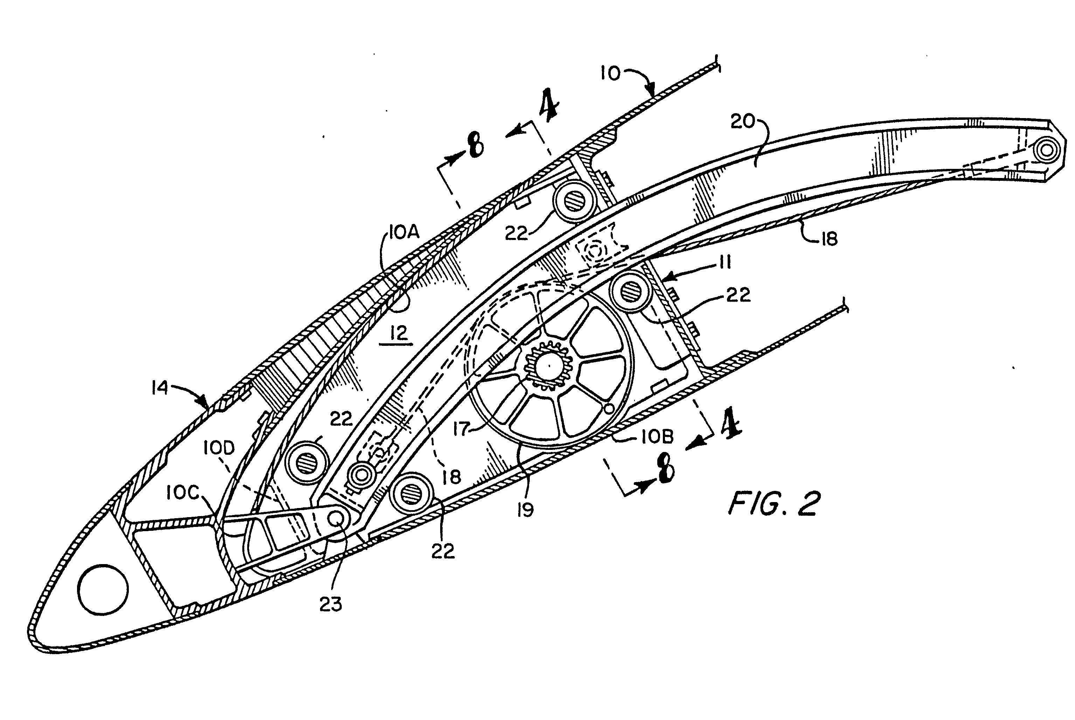

FIG. 2 is a chordwise cross-sectional view taken in the direction indicated by the line 2-2 of FIG. 1 and shows a wing leading edge slat 14 at a fully retracted position whereat it completes the leading edge aerodynamic profile of the wing airfoil section for the cruise flight mode of airplane operation. Due to limited cross-sectional thickness of the airfoil at the location of the spanwise outboard slat panel 14, there is a limited stowage volume for a slat actuating mechanism. However, a preferred embodiment of the present invention, which relates to the combination of a slat support track 20 and a cable 18 wound around a cable drum 19, is capable of being housed completely within the leading edge airfoil section envelope of the wing; and this combination is geometrically arranged to produce a relatively large amount of slat panel extension or retraction travel.

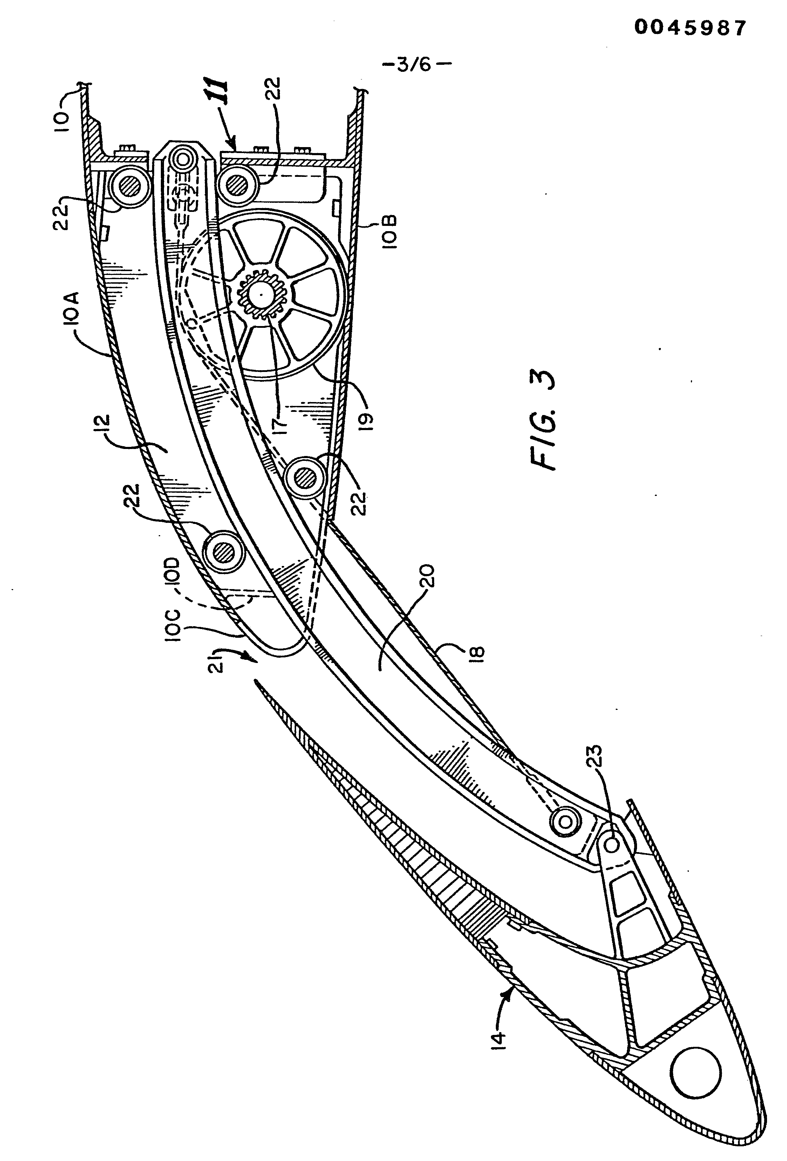

FIG. 3 is a chordwise cross-sectional view similar to FIG. 2 with the slat panel 14 extended, by the preferred embodiment of a track extension mechanism, to a forward operating position; whereat, an aerodynamic slot 21 is formed between the leading edge of the fixed wing structure and the trailing edge of the extended slat panel 14; and this slat position is generally used for the landing mode of airplane operation.

The fixed leading edge section of the wing comprises: an upper surface skin panel 10A, a lower surface skin panel 10B, and the upper and lower skin panels 10A and 10B are attached to a rigid leading edge nose structure 10C having a spanwise nose beam 10D; and this entire structure is supported by chordwise wing ribs 12 which are fixedly attached to a spanwise structural member such as the front wing spar 11.

Each individual slat panel 14 is supported in the extended operating position shown in FIG. 3 by the curved track 20 which is mounted on rollers 22 having their rotational axis fixed to the wing rib 12. These curved slat support trackes 20 are main carrier tracks for the slat panels 14.

The forward end of these tracks 20 is pivotally connected at 23 to the slat panels 14; and the arcuate extension or retraction motion of the main carrier tracks 20 is about a theoretical center-of-rotation (not shown). There are two spanwise spaced main carrier tracks 20 for support of each individual slat panel 14; and the tracks 20 need not be located as shown in FIG. 1, but they could be located at the ends of the slat panel 14. When the slat panel 14 is in the fully retracted position, the main carrier tracks 20 protrude aft through a small opening in the front wing spar 11 and this protrusion of the track, has a fluid tight enclosure 24, shown in FIG. 1, because the interior of the wing is usually a fuel bay area.

Each individual slat panel 14 is supported in the extended position shown in FIG. 3 by the curved track 20 having the internally mounted cable 18 which is wound around the cable drum 19 as shown in the enlarged detail views of FIGS. 5 to 7.

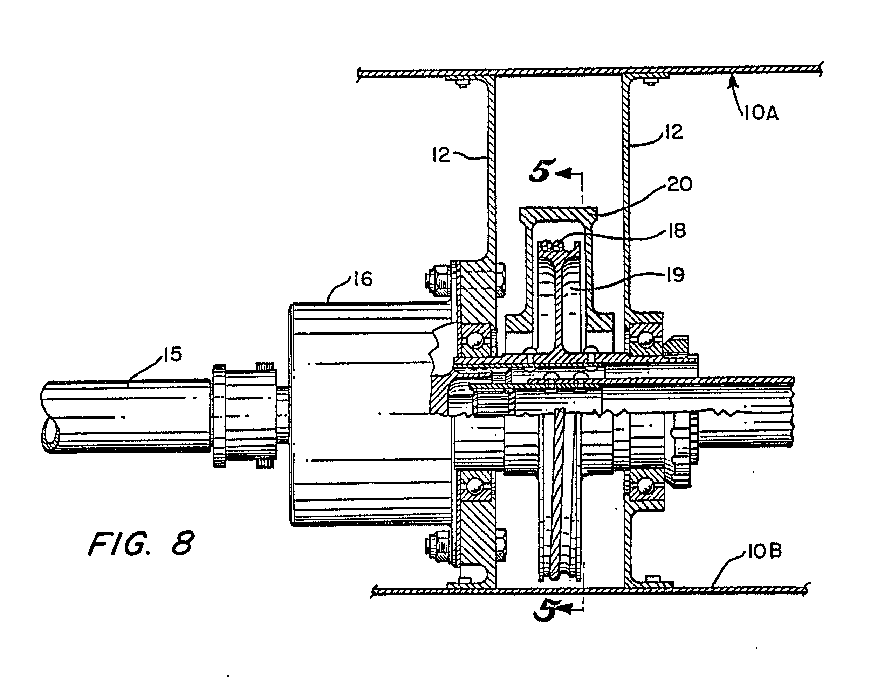

Referring to FIGS. 1, 4 and 8, which are sectional views taken along the lines 4-4, and 8-8, respectively, of FIG. 2, the cable drum 19, track 20 and rollers 22 are centered spanwise between a pair of wing ribs 12 which provide a structurally straddled support. The axially aligned series of high speed shafts 15 rotate within the approximate range of 600 to 1,000 r.p.m. and go into and through actuators 16 which comprise a planetary gear mechanism of about a 200:1 reduction ratio and which rotates an output collar 17 at a relatively slow rate of speed. The actuator output collar 17 is splined to cable drum 19 which through cable 18 extends or retracts the slat panel 14. The spanwise series of high speed shafts 15 function to coordinate the extension or retraction sequence of the spanwise series of slat panels 14.

One of the problems in getting maximum extension travel of a slat panel, from the fixed leading edge portion of a wing, is that as the cross-sectional thickness of a wing airfoil section decreases, it becomes more and more difficult to design a simple slat actuating mechanism that will operatively: extend a slat panel to the distance shown in FIG. 3; function satisfactorily throughout the complete extension and retraction cycle; and still be capable of stowing within the wing cavity area as shown in FIG. 2. It is conceivable that a ball-screw jack or a linear actuator, with one end pivotally connected to the slat panel and the other end connected to the front wing spar, as in generally known slat extension systems, could be used to produce a maximum slat extension similar to the present invention; however, it will also be evident that a substantial cutout will have to be made in the undersurface of the fixed leading edge portion of the wing for clearance of said actuators and that these cutouts will have to be in addition to those made for the set of slat support tracks and the set of programming tracks or mechanism, because a typical extension system for a single slat panel generally requires: a set of support tracks; a set of programming members; and a set of actuation members such as ball-screws or linear actuators. Also, for each of these slat extension sets, it is generally necessary to provide a pair of wing ribs for structural support. Further, the cutouts in the fixed leading edge cause an irregularity from an aerodynamic airflow standpoint because they disrupt the airflow through the aerodynamic slot shown in FIG. 3.

Referring to FIGS. 2 to 5, it will be noted that the cable 18 is located up inside the channel of the slat support track 20 and this allows the cable drum 19 to be raised up higher into the wing cavity so that it will not protrude below the lower surface of the wing. Referring to the outboard slat panel 14 shown in the plan view of FIG. 1, because an airplane wing generally tapers in planform and thickness toward the tip, the airfoil cross-sectional area forward of the front wing spar 11, in generally known slat extension systems, is such that there is insufficient area for installing said known systems and still be capable of producing the amount of slat travel or extension distance of the present invention, without extreme complexity.

The slat support track 20 has to fit within the cross-sectional contour area of the wing airfoil section and there has to be a certain amount of space left at the top of the wing cavity for structural support material. Also, in order to aerodynamically program the slat panel extension positions, a certain amount of space, both above and below the track 20, is necessary for properly locating and mounting the rollers 22 that support the track 20. The operating positions of the slat panel, for producing satisfactory aerodynamic characteristics, substantially determines the location of the track 20 and rollers 22; and in most cases, the track 20 will be positioned closer to the upper surface of the wing because of the curvature of the track 20 which follows the upper surface curvature more closely. Therefore, as a result, the largest space that remains in the airfoil envelope for locating an actuating mechanism, is the distance between the track 20 and the lower surface of the wing 10. Even though this is the largest remaining area for placement of actuating mechanism it is still critical in depth size because the airfoil cross-sectional contour, at the location of the outboard slat panel 14, is quite slender in comparision to an inboard slat panel location where it gets quite thick. Therefore the closeness between the center line of the track 20 and axis of the cable drum 19, as shown in the present invention, provides a minimum depth for fitting the combination within the wing cross-sectional area.

Referring to FIGS. 2 and 3, it can be seen that if the periphery of the cable drum 19 was clear of or below the undersurface of the slat support track 20, the axis of the cable drum 19 would have to be lowered and the lower portion of the cable drum 19 would protrude from the lower surface of the wing.

FIG. 5 shows a cable tension adjusting nut 25 and a stack of spring washers 26 which are used for tension compensation due to temperature variation and cable stretch. The cable drum 19 is mounted slightly off center on the actuator output shaft collar 17 in order to compensate for the small change in cable length that occurs during extension and retraction due to the changing geometry. The cable length is greater when the cable drum 19 is in the center of the cable span, than it is at the ends of the span. A steel ball 27 is swaged on the cable 18 and is retained in a slot in the rim of the cable drum 19 to provide a positive connection between the cable and drum.

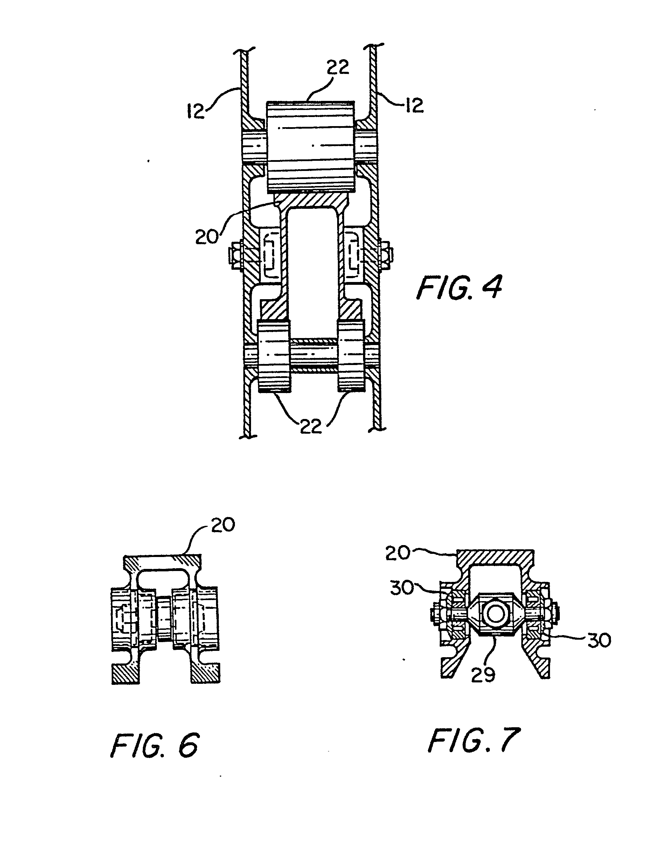

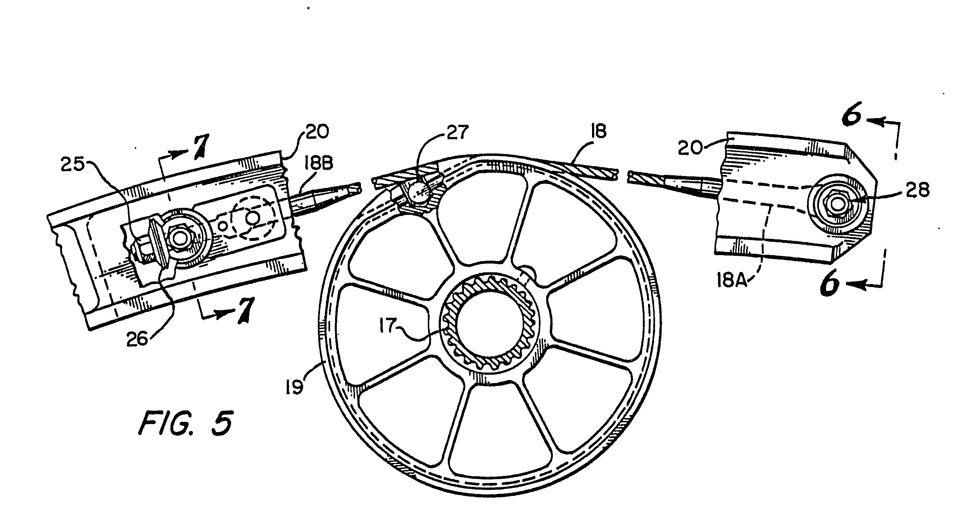

FIG. 6 is an end view of the track 20, taken along the line 7-7 of FIG. 5, to show the aft cable terminal fitting 18 connection to the track 20 by the threaded fastener 28.

FIG. 7 is a sectional view, taken along the line 7-7 of FIG. 5, through the forward connection of the cable 18 and the track 20. This connection is made by a trunnion 29 which is supported by two bearings 30 mounted in the track 20. A forward cable terminal fitting 18B passes through a hole in the trunnion 29 and is secured by the adjusting nut 25.

While the invention has been disclosed with reference to a preferred embodiment, it is to be understood that those modifications and changes which become obvious to a person skilled in the art to which this invention pertains, as a result of the teaching hereof, are considered to be encompassed by the following claims.

D HO/JS/Boeing 56 Euro.

-1-

CLAIMS

1. A mechanism for extending a high-lift device relative to an airfoil, comprising: a carrier track connected to said high-lift device and extending chordwise of said airfoil; rollers secured to said airfoil and being in rolling contact with said track for support thereof; said carrier track having an inverted U-shaped cross section forming a channel along the length thereof; a cable fastened within said track channel at either end thereof; a cable drum adapted to winding engagement with said cable fastened between the interior ends of said track channel for extending the high-lift device relative to said airfoil; and thereby increasing the aerodynamic lift characteristics thereof.

2. A mechanism for extending a high-lift device relative to an airfoil, comprising: a pair of wing ribs spaced apart spanwise and extending chordwise of said airfoil; a set of cylindrical rollers being straddle mounted between said pair of wing ribs; a slat carrier track having an inverted U-shaped cross section and positioned between said pair of wing ribs; said rollers being located above and below said slat carrier track with their rotational axis aligned transversely thereto for rolling contact support therewith; a cable fastened within the inner wall length of said track at either end thereof; a cable drum adapted to winding engagement with said cable fastened between the inner walls of said track at either end thereof for extending the high-lift device relative to said airfoil; and thereby increasing the aerodynamic lift characteristics thereof.

3. A mechanism for extending a leading edge slat relative to a wing portion, comprising: slat carrier track having an inverted U-shaped cross section forming a channel along the length thereof and extending chordwise fore and aft in said wing portion; a set of cylindrical rollers mounted to the fixed main wing portion for supporting said track; a cable fastened within said track channel at either end thereof; and a cable drum adapted to winding engagement with said cable fastened between the inner walls of said track channel at either and thereof for extending the slat relative to said wing portion.

4. A mechanism for moving an auxiliary airfoil from a retracted position whereat it forms the leading edge portion of a main airfoil to an extended position whereat it increases the overall airfoil area, comprising: a carrier track extending chordwise fore and aft in said main airfoil and being pivotally connected at its fore end to said auxiliary airfoil; rollers secured to said main airfoil for guiding support of said track; said carrier track having a hat-shaped cross section with a channel opening facing downwardly; a length of cable positioned within the interior channel of said track and each end of said length of cable being fastened to an end of said track; a cable drum adapted to a wound drive engagement with said cable for moving said carrier track for and aft to effect relative movement between said auxiliary airfoil and said main airfoil; said track channel having its sides extending downwardly beyond the cable winding on said cable drum, such that the inner facing sides form a raceway for maintaining the cable and cable drum in said raceway.

FIG. 1

FIG. 2

FIG. 3

FIG. 4

FIG. 6

FIG. 7

FIG. 5

FIG. 8

| | European Patent Office | EUROPEAN SEARCH REPORT | Application number EP 81 20 0789 |
|---|---|---|---|

## DOCUMENTS CONSIDERED TO BE RELEVANT

| Category | Citation of document with indication, where appropriate, of relevant passages | Relevant to claim |
|---|---|---|
| | AIRCRAFT ENGINEERING, vol. 45, no. 11, November 1973, Bunhill publications ltd. London, GB "Development of the family", pages 22-31.<br><br>  * Page 24, right-hand column, line 4 to page 25, left-hand column, line 15; figures 42-44 *<br><br>-- | 1-4 |
| | DE - B - 1 233 216 (ANDERSON)<br><br>  * Column 3, line 65 to column 4, line 32; figures 4,6 *<br><br>-- | 1-3 |
| | FR - A - 2 128 856 (BRITISH AIRCRAFT CORP.)<br><br>  * Page 2, line 30 to page 3, line 12; figures 1-7 *<br><br>-- | 1-4 |
| | US - A - 3 041 014 (GERIN)<br><br>  * Column 10, lines 52-71; figures 28-31 *<br><br>-- | 1-4 |
| | US - A - 2 222 935 (CHILTON)<br><br>  * Page 1, right-hand column, lines 35-45; figures 1-5 *<br><br>-- | 1-4 |
| A | US - A - 2 000 666 (OSBORN)<br><br>---- | |

**CLASSIFICATION OF THE APPLICATION (Int Cl.³)**

B 64 C 13/30

**TECHNICAL FIELDS SEARCHED (Int. Cl.³)**

B 64 C
F 16 H

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family corresponding document

The present search report has been drawn up for all claims

| Place of search | Date of completion of the search | Examiner |
|---|---|---|
| The Hague | 16-10-1981 | KIESLINGER |

EPO Form 1503 1 06.78